# EUROPÄISCHE PATENTANMELDUNG

(11) **EP 3 351 350 A2**
(43) Veröffentlichungstag der Anmeldung: **25.07.2018**
(21) Anmeldenummer: 17207230.8
(22) Anmeldetag: 14.12.2017
(51) Int. Cl.: B25J 9/00, B25J 19/02, B65G 47/00

(54) **VORRICHTUNG ZUM AUTOMATISIERTEN ENTNEHMEN VON IN EINEM BEHÄLTER ANGEORDNETEN WERKSTÜCKEN**

(30) Priorität: 20.01.2017 DE 102017000524
(71) Anmelder: Liebherr-Verzahntechnik GmbH, 87437 Kempten (DE)
(72) Erfinder: Zollitsch, Markus, 87490 Haldenwang (DE); Hänschke, David, 87452 Altusried (DE); Riedmiller, Bernhard, 87497 Wertach (DE); Mattern, Thomas, 87669 Rieden (DE)
(74) Vertreter: Behr, Wolfgang

(57) **Zusammenfassung**

Die vorliegende Erfindung zeigt eine Vorrichtung zum automatisierten Entnehmen von in einem Behälter angeordneten Werkstücken, mit einer ersten Objekterkennungseinrichtung zum Erfassen der Werkstücke im Behälter; einem ersten Greifer zum Greifen und Entnehmen der Werkstücke aus dem Behälter; einer Steuerung zur Auswertung der Daten der ersten Objekterkennungseinrichtung, zur Pfadplanung und zur Ansteuerung des ersten Greifers; einer Zwischenstation, auf welcher der erste Greifer die Werkstücke nach dem Entnehmen aus dem Behälter ablegt, und einer Positioniervorrichtung, welche die Werkstücke ausgehend von der Zwischenstation genauer positioniert und/oder vereinzelt. Dabei ist vorgesehen, dass die Zwischenstation mindestens eine kippbare Ablagefläche aufweist, welche über einen Kippmechanismus in eine schräge Position kippbar ist.

## Beschreibung

Die vorliegende Erfindung betrifft eine Vorrichtung zum automatisierten Entnehmen von in einem Behälter angeordneten Werkstücken, welche eine erste Objekterkennungseinrichtung zum Erfassen der Werkstücke im Behälter, einen ersten Greifer zum Greifen und Entnehmen der Werkstücke aus dem Behälter, sowie eine Steuerung zur Auswertung der Daten der ersten Objekterkennungseinrichtung, zur Pfadplanung und zur Ansteuerung des ersten Greifers aufweist.

Solche Vorrichtungen sind unter dem Schlagwort "Griff in die Kiste" bekannt geworden, und dienen insbesondere zur Bestückung von Fertigungsanlagen mit Werkstücken, welche ungeordnet in einem Behälter angeliefert werden. Solche Vorrichtungen sind bspw. aus den Druckschriften DE102014008444A1, DE102014008108A1, DE102014008107A1, DE102013013114A1, DE102012013031A1, DE102012013030A1, DE102012013029A1, DE102012013023A1, DE102012013022A1 und DE102012012988A1 der gleichen Anmelderin bekannt.

Das Greifen von Werkstücken aus einem Behälter stellt eine komplexe Aufgabe dar. Insbesondere hat es sich als schwierig herausgestellt, sowohl eine komplette Entleerung der Behälter als auch eine genaue Ablage der Werkstücke auf der gewünschten Endablage sicher zu stellen. Daher ist es aus dem oben genannten Stand der Technik bekannt, eine Zwischenstation einzusetzen, auf welcher der erste Greifer die Werkstücke nach dem Entnehmen aus dem Behälter ablegt. Eine Positioniervorrichtung, bspw. in Form eines zweiten Greifers, wird dann eingesetzt, um die Werkstücke ausgehend von der Zwischenstation genauer zu positionieren und/oder zu vereinzeln.

So zeigt die DE 102012012988A1 eine Zwischenstation mit einer schrägen Ebene, auf welche der als Magnetgreifer ausgestaltete erste Greifer die aus dem Behälter gegriffenen Werkstücke fallen lässt. Von dort aus rutschen die Werkstücke zu einer Transportstrecke, welche die Werkstücke zu einem Entnahmebereich transportiert. Dort ist eine zweite Objekterkennungseinrichtung vorgesehen, welche die Werkstücke auf der Transportstrecke nochmals erfasst, so dass der als Positioniervorrichtung eingesetzte zweite Greifer diese genauer greifen und auf der Endablage anordnen kann. Das Transportband weist einen Umlaufbereich und einen Ausschleusebereich auf. Die DE 102012012988A1 erwähnt, dass alternativ zu dem im Ausführungsbeispiel gezeigten Aufbau und eine Zwischenstation eingesetzt werden kann, welche einen Drehtisch als Transporteinrichtung aufweist.

Aufgabe der vorliegenden Erfindung ist es, die bekannten Vorrichtungen zum automatisierten Entnehmen von in einem Behälter angeordneten Werkstücken weiter zu verbessern.

Diese Aufgabe wird durch die Vorrichtungen gemäß den unabhängigen Ansprüchen 1, 7 und 9 gelöst. Noch vorteilhafte Ausgestaltungen der vorliegenden Erfindung sind Gegenstand der Unteransprüche.

In einem ersten Aspekt umfasst die vorliegende Erfindung eine Vorrichtung zum automatisierten Entnehmen von in einem Behälter angeordneten Werkstücken, mit einer ersten Objekterkennungseinrichtung zum Erfassen der Werkstücke im Behälter, einem ersten Greifer zum Greifen und Entnehmen der Werkstücke aus dem Behälter, und einer Steuerung zur Auswertung der Daten der ersten Objekterkennungseinrichtung, zur Pfadplanung und zur Ansteuerung des ersten Greifers. Weiterhin weist die Vorrichtung eine Zwischenstation auf, auf welcher der erste Greifer die Werkstücke nach dem Entnehmen aus dem Behälter ablegt, sowie eine Positioniervorrichtung, welche die Werkstücke ausgehend von der Zwischenstation genauer positioniert und/oder vereinzelt. Erfindungsgemäß ist gemäß dem ersten Aspekt vorgesehen, dass die Zwischenstation mindestens eine kippbare Ablagefläche aufweist, welche über einen Kippmechanismus in eine schräge Position kippbar ist. Gemäß dem ersten Aspekt der vorliegenden Erfindung kann die Ablagefläche daher dazu genutzt werden, um Werkstücke auf der Ablagefläche abzulegen. Durch die Kippbarkeit ist es weiterhin möglich, die Ablagefläche in eine schräge Position zu verbringen. Dies erlaubt neue Einsatzmöglichkeiten. Bevorzugt bildet die Ablagefläche hierfür in der schrägen Position, in welche sie kippbar ist, eine schräge Ebene.

Bevorzugt weist die Ablagefläche eine erste Position auf, in welcher sie im Wesentlichen horizontal ausgerichtet ist, sowie die zweite, schräge Position, wobei die Ablagefläche durch den Kippmechanismus von der ersten in die zweite Position und/oder von der zweiten in die erste Position kippbar ist. Der Kippmechanismus weist bevorzugt einen Antrieb auf, über welche die Ablagefläche kippbar ist. Beispielsweise kann ein Pneumatik- oder Hydraulikzylinder und/oder ein Linearantrieb eingesetzt werden. Die Ablagefläche weist bevorzugt eine horizontale Kippachse auf, um welche sie kippbar ist.

In einer bevorzugten Ausgestaltung der vorliegenden Erfindung ist die kippbare Ablagefläche so ausgestaltet, dass ein auf der kippbaren Ablagefläche abgelegtes Werkstück durch das Kippen von der kippbaren Ablagefläche rutscht. Beispielsweise kann dies dazu eingesetzt werden, um Werkstücke zu vereinzeln und/oder auszusortieren. Das Werkstück kann von der kippbaren Ablagefläche auf einen weiteren Bereich der Zwischenstation rutschen.

Die kippbare Ablagefläche kann eine offene Kante, welche sich in der schrägen Position unten befindet, aufweisen, so dass Werkstücke über diese Kante ungehindert rutschen können. Die Ablagefläche kann weiterhin in seitlichen Bereichen, welche an die offene Kante anschließen, einen nach oben auskragenden Rand aufweisen, welcher verhindert, dass Werkstücke dort von der Ablagefläche rutschen.

In einer möglichen Ausgestaltung der vorliegenden Erfindung weist die Zwischenstation eine Transproteinrichtung auf, welche die Werkstücke von einem Ablagebereich in einen Entnahmebereich transportiert. Durch die räumliche Trennung des Ablagebereiches und des Entnahmebereiches wird es einfacher, den ersten Greifer, welcher zum Ablegen dient, sowie die Positioniervorrichtung, welche zur Entnahme der Werkstücke von der Zwischenstation dient, parallel und/oder unabhängig voneinander arbeiten zu lassen.

In einer besonders bevorzugten Ausgestaltung der vorliegenden Erfindung handelt es sich bei der Transporteinrichtung um einen Drehtisch.

In einer ersten Variante des ersten Aspektes ist die kippbare Ablagefläche so angeordnet, dass ein auf der kippbaren Ablagefläche abgelegtes Werkstück durch Kippen der kippbaren Ablagefläche auf die Transporteinrichtung rutscht. Die kippbare Ablagefläche kann daher insbesondere zur Vereinzelung genutzt werden.

Bevorzugt weist die Vorrichtung einen Sensor auf, welcher erkennt, ob mehr als ein Werkstück gegriffen wurde. Insbesondere ist die Steuerung so ausgestaltet, dass sie den Greifer dann, wenn mehr als ein gegriffenes Werkstück erfasst wurden, so ansteuert, dass die Werkstücke auf der kippbaren Ablagefläche abgelegt werden und durch Kippen der Ablagefläche auf die Transporteinrichtung rutschen. Wurde mehr als ein Werkstück gegriffen, so liegt dies üblicherweise daran, dass das mit dem Greifer gegriffene Werkstück mit einem anderen Werkstück verhakt ist. Das Rutschen von der Ablagefläche auf die Transporteinrichtung unterstützt das Lösen einer solchen Verhakung. Als Sensor kann beispielsweise eine Lichtschranke eingesetzt werden, welche ermittelt, ob das gegriffene Werkstück in einem definierten Abstand von dem ersten Greifer endet. Endet das Werkstück nicht in dem definierten Abstand, wird daraus geschlossen, dass mehr als ein Werkstück gegriffen wurde.

Bevorzugt ist die Steuerung so ausgestaltet, dass dann, wenn nur ein Werkstück gegriffen wurde, dieses unmittelbar auf der Transporteinrichtung abgelegt wird. Wurde nur ein Werkstück gegriffen, wird die kippbare Ablagefläche daher nicht benötigt.

Wie bereits oben beschrieben handelt es sich bei der Transporteinrichtung bevorzugt um einen Drehtisch, so dass bei der ersten Variante ein Werkstück von der kippbaren Ablagefläche auf eine Ablagefläche des Drehtisches rutscht.

In einer zweiten Variante des ersten Aspektes ist die kippbare Ablagefläche an der Transporteinrichtung angeordnet. In einer bevorzugten Ausgestaltung weist die Transporteinrichtung dabei mehrere separat kippbare Ablageflächen auf.

Insbesondere kann die kippbare Ablagefläche dabei an einem Drehtisch angeordnet sein, wobei der Drehtisch bevorzugt mehrere separat kippbare Ablageflächen aufweist.

Insbesondere können alle Ablageflächen der Transporteinrichtung kippbar ausgestaltet sein. Handelt es sich um einen Drehtisch, sind bevorzugt mehrere Ablageflächen vorgesehen, welche jeweils separat kippbar sind, wobei bevorzugt alle Ablageflächen kippbar sind.

Eine kippbare Ablagefläche gemäß der vorliegenden Erfindung kann zur Ausschleusung von fehlerhaften und/oder überzähligen und/oder verhakten Werkstücken eingesetzt werden. Insbesondere kann eine an der Transporteinrichtung angeordnete kippbare Ablagefläche zum Ausschleusen von fehlerhaften und/oder überzähligen und/oder verhakten Werkstücken dienen. Gegebenenfalls kann jedoch auch eine nicht an der Transporteinrichtung angeordnete kippbare Ablagefläche zum Ausschleusen genutzt werden.

Bevorzugt weist die erfindungsgemäße Vorrichtung eine Ausschleuse-Vorrichtung auf, welche so angeordnet ist, dass ein auf der kippbaren Ablagefläche abgelegtes Werkstück durch Kippen der Ablagefläche zur Ausschleuse-Vorrichtung rutscht.

Bei der Ausschleuse-Vorrichtung kann es sich in einem möglichen Ausführungsbeispiel um eine Schublade handeln. Bevorzugt kann die Schublade von außerhalb einer Schutzumfassung der Vorrichtung aus bedient werden. Dies erlaubt es, ausgeschleuste Werkstücke manuell aus der Vorrichtung zu entfernen, ohne dass hierfür die Anlage stillgelegt werden müsste.

Bevorzugt ist die Ausschleuse-Vorrichtung so unterhalb der Transporteinrichtung angeordnet, dass durch Kippen einer an der Transporteinrichtung angeordneten Ablagefläche ein auf dieser Ablagefläche befindliches Werkstück in die Ausschleuse-Vorrichtung rutscht.

Die erfindungsgemäße Vorrichtung kann mehrere kippbare Ablageflächen aufweisen.

Die erste und die zweite Variante des ersten Aspektes der vorliegenden Erfindung können bevorzugt miteinander kombiniert werden. Insbesondere kann eine erste kippbare Ablagefläche vorgesehen sein, wobei auf der ersten kippbaren Ablagefläche abgelegte Werkstücke durch Kippen auf die Transporteinrichtung rutschen. Weiterhin kann eine zweite kippbare Ablagefläche vorgesehen, welche an der Transporteinrichtung angeordnet ist. Bevorzugt können dabei Werkstücke durch Kippen der zweiten kippbaren Ablagefläche ausgeschleust werden.

In einem zweiten, unabhängigen Aspekt umfasst die vorliegende Erfindung eine Vorrichtung zum automatisierten Entnehmen von in einem Behälter angeordneten Werkstücken, mit einer ersten Objekterkennungseinrichtung zum Erfassen der Werkstücke im Behälter, einen ersten Greifer zum Greifen und Entnehmen der Werkstücke aus dem Behälter, und einer Steuerung zur Auswertung der Daten der ersten Objekterkennungseinrichtung, zur Pfadplanung und zur Ansteuerung des ersten Greifers. Weiterhin ist eine Zwischenstation vorgesehen, auf welcher der erste Greifer die Werkstücke nach dem Entnehmen aus dem Behälter ablegt, wobei die Zwischenstation eine Transporteinrichtung umfasst, welche die Werkstücke von einem Ablagebereich in einem Entnahmebereich transportiert. Weiterhin ist eine Positioniervorrichtung vorgesehen, welche die Werkstücke ausgehend von der Zwischenstation genauer positioniert und/oder vereinzelt, sowie eine zweite Objekterkennungseinrichtung zum Erfassen der Werkstücke auf der Transporteinrichtung. Gemäß dem zweiten Aspekt weist die zweite Objekterkennungseinrichtung eine Lichtquelle zur Beleuchtung des Werkstücks auf. Eine solche Lichtquelle erlaubt eine erheblich verbesserte Objekterfassung, welche unabhängig vom Umgebungslicht ist.

Bevorzugt weist die zweite Objekterkennungseinrichtung eine Einhausung auf, welche das Einfallen von Streulicht von außen auf das Werkstück verringert. Die Einhausung erlaubt daher eine verbesserte Objekterfassung durch die zweite Objekterkennungseinrichtung, da sichergestellt wird, dass die Werkstücke immer unter den gleichen Lichtverhältnissen erfasst werden.

Besonders bevorzugt erstreckt sich die Einhausung von einem Sensor der zweiten Objekterkennungseinrichtung, welcher in einem ersten Abstand zu einer Ablagefläche der Transproteinrichtung angeordnet ist, zur Transproteinrichtung hin. Dabei bleibt zwischen der Einhausung und der Ablagefläche der Transporteinrichtung ein Zufuhrbereich und ein Abfuhrbereich offen, welcher das Zuführen und Abführen von Werkstücken auf der Transporteinrichtung in den Bereich der Einhausung erlaubt. Die Einhausung erlaubt es dabei, den Sensor in einem für die Erfassung besonders geeigneten Abstand anzuordnen und dennoch die Lichtbedingungen im Erfassungsbereich zu kontrollieren.

Bevorzugt endet die Einhausung im Zufuhrbereich und im Abfuhrbereich in einem zweiten Abstand zur Ablagefläche der Transporteinrichtung, welcher weniger als 50% des ersten Abstands beträgt. Bevorzugt beträgt der zweite Abstand weniger als 20% des ersten Abstandes. Die Einhausung endet daher erheblich näher an der Ablagefläche der Transporteinrichtung als der Sensor zu dieser angeordnet ist.

Besonders bevorzugt bildet die Einhausung ein nur zur Transporteinrichtung hin offenes Gehäuse.

Bevorzugt ist der Sensor über der Transporteinrichtung angeordnet und die Seitenwände der Einhausung erstrecken sich von oben nach unten zur Transporteinrichtung hin.

Die Lichtquelle der zweiten Objekterkennungseinrichtung ist bevorzugt in oder an der Einhausung angeordnet.

In einem dritten Aspekt umfasst die vorliegende Erfindung eine Vorrichtung zum automatisierten Entnehmen von in einem Behälter angeordneten Werkstücken, mit einer ersten Objekterkennungseinrichtung zum Erfassen der Werkstücke im Behälter, einem ersten Greifer zum Greifen und Entnehmen der Werkstücke aus dem Behälter, und mit einer Steuerung zur Auswertung der Daten der ersten Objekterkennungseinrichtung, zur Pfadplanung und zur Ansteuerung des ersten Greifers. Weiterhin weist die Vorrichtung eine Zwischenstation auf, auf welche der erste Greifer die Werkstücke nach dem Entnehmen aus dem Behälter ablegt, wobei die Zwischenstation einen Drehtisch umfasst, welcher die Werkstücke von einem Ablagebereich in einem Entnahmebereich transportiert. Weiterhin ist eine Positioniervorrichtung vorgesehen, welche die Werkstücke ausgehend von der Zwischenstation genauer positioniert und/oder vereinzelt, sowie eine zweite Objekterkennungseinrichtung zum Erfassen der Werkstücke auf den Drehtisch. Gemäß dem dritten Aspekt ist die zweite Objekterkennungseinrichtung so über den Drehtisch angeordnet, dass ein Werkstück auf dem Weg von dem Ablagebereich in den Entnahmebereich in einen Erfassungsbereich gelangt, wo es durch die zweite Objekterkennungseinrichtung erfasst wird, bevor es durch Drehung des Drehtisches weiter zum Entnahmebereich bewegt wird. Erfindungsgemäß erfolgt daher nicht nur die Ablage und die Entnahme der Werkstücke, sondern zusätzlich auch die Erfassung der Werkstücke in räumlich voneinander getrennten Bereichen. Die räumlich getrennte Erfassung hat den Vorteil, dass bei der Erfassung keine Rücksicht auf den Arbeitsbereich der Positioniervorrichtung genommen werden muss. Trotz des räumlich getrennten Erfassens der Werkstücke ist durch den Drehtisch die Position der Werkstücke auch im Entnahmebereich exakt bekannt, und kann daher zur exakten Ansteuerung der Positioniervorrichtung herangezogen werden.

Bevorzugt arbeitet der Drehtisch getaktet und weist mindestens drei Drehpositionen auf, wobei eine Ablage des Drehtisches in der ersten Drehposition des Drehtisches im Ablagebereich, in der zweiten Drehposition im Erfassungsbereich und in der dritten Drehposition im Entnahmebereich angeordnet ist. Ein Werkstück, welches in einem ersten Takt auf der Ablagefläche abgelegt wurde, gelangt daher in einem späteren Takt in den Erfassungsbereich, wo es erfasst wird, und in einem noch späteren Takt in den Entnahmebereich, wo es durch die Positioniervorrichtung von dem Drehtisch entnommen wird.

Bevorzugt erfolgt das Ablegen eines Werkstückes auf dem Drehtisch durch den ersten Greifer, das Erfassen eines Werkstückes auf dem Drehtisch durch die zweite Objekterkennungseinrichtung und das Wiederaufnehmen eines Werkstückes von dem Drehtisch durch die Positioniervorrichtung jeweils bei stehendem Drehtisch. Der stehende Drehtisch erlaubt dabei eine besonders exakte Vorgehensweise.

Weiterhin bevorzugt weist der Drehtisch mindestens drei Ablageflächen auf, wobei sich immer dann, wenn eine erste Ablagefläche im Ablagebereich angeordnet ist, eine zweite Ablagefläche im Erfassungsbereich und eine dritte Ablagefläche im Entnahmebereich befindet. Dies ermöglicht ein paralleles Arbeiten in allen drei Bereichen.

Beim dritten Aspekt müssen die einzelnen Ablageflächen des Drehtisches nicht physisch voneinander getrennt sein. In einer besonders einfachen Ausgestaltung kann der Drehtisch schlich eine runde physische Ablagefläche aufweisen, welche bei einer getakteten Arbeitsweise lediglich durch die Steuerung in unterschiedliche Ablageflächen aufgeteilt wird. Bevorzugt sind die Ablageflächen dagegen als separate Tischelemente ausgeführt, welche weiterhin bevorzugt separat voneinander kippbar sind.

Besonders bevorzugt erfolgt jeweils gleichzeitig ein Ablegen eines ersten Werkstücks auf den Drehtisch durch den ersten Greifer, ein Erfassen eines zweiten Werkstückes auf dem Drehtisch durch die zweite Objekterkennungseinrichtung und eine Wiederaufnahme eines dritten Werkstückes von dem Drehtisch durch die Positioniervorrichtung.

Der Drehtisch kann dabei in einer bevorzugten Ausgestaltung exakt drei Ablageflächen aufweisen und/oder die drei Schritte des Ablegens, Erfassens und Wiederaufnehmens können in drei aufeinanderfolgenden Takten erfolgen. In alternativen Ausgestaltungen kann der Drehtisch jedoch auch mehr als drei Ablageflächen aufweisen, welche bspw. als zusätzlicher Speicher genutzt werden können.

Die Vorrichtungen gemäß dem ersten, dem zweiten und dem dritten Aspekt der vorliegenden Erfindung sind jeweils unabhängig voneinander Gegenstand der vorliegenden Anmeldung. Besonders bevorzugt werden jedoch der erste und der zweite Aspekt miteinander kombiniert, und/oder der zweite und der dritte Aspekt miteinander kombiniert, und/oder der erste und der dritte Aspekt miteinander kombiniert. Besonders bevorzugt werden alle drei Aspekte miteinander kombiniert.

Bei einer Kombination des zweiten und dritten Aspektes ist die Einhausung bevorzugt im Erfassungsbereich angeordnet, wobei die Ablageflächen des Drehtisches durch Drehung des Drehtisches jeweils unter die Einhausung gefahren werden können.

Bei einer Kombination des zweiten und ersten Aspektes ist die kippbare Ablagefläche bevorzugt unter der Einhausung angeordnet und/oder anordenbar. Hierdurch kann dann, wenn durch die zweite Objekterkennungseinrichtung ein fehlerhaftes und/oder eine falsche Anzahl und/oder verhakte Teile erfasst werden, durch Kippen der Ablagefläche unmittelbar eine Ausschleusung erfolgen. Bevorzugt ist die Ausschleuse-Vorrichtung dabei so angeordnet, dass durch Kippen einer unter der Einhausung angeordneten kippbaren Ablagefläche die auf dieser Ablagefläche angeordneten Werkstücke in die Ausschleuse-Vorrichtung rutschen. Weiterhin bevorzugt befindet sich die kippbare Ablagefläche mit ihrer ganzen Grundfläche unterhalb der Einhausung, wobei die Seitenwände der Einhausung bevorzugt ein Kippen der Ablagefläche innerhalb der Einhausung ermöglichen.

Bei einer Kombination des dritten und ersten Aspektes sind die Ablageflächen des Drehtisches bevorzugt kippbar. Bevorzugt ist die Ausschleuse-Vorrichtung dabei so angeordnet, dass durch Kippen einer im Erfassungsbereich angeordneten kippbaren Ablagefläche die auf dieser Ablagefläche angeordneten Werkstücke in die Ausschleuse-Vorrichtung rutschen. Hierdurch kann dann, wenn durch die zweite Objekterkennungseinrichtung ein fehlerhaftes und/oder eine falsche Anzahl und/oder verhakte Teile erfasst werden, durch Kippen der Ablagefläche unmittelbar eine Ausschleusung erfolgen.

Bevorzugte Ausgestaltungen der vorliegenden Erfindung, welche bei Vorrichtungen gemäß jedem der oben beschriebenen Aspekte zum Einsatz kommen können, werden im Folgenden näher beschrieben:
In einer möglichen Ausgestaltung der vorliegenden Erfindung kann die Positioniervorrichtung die Werkstücke von der Zwischenstation aufnehmen und auf eine zweite Zwischenstation und/oder eine Endablage legen. Die zweite Zwischenstation kann beispielsweise dazu eingesetzt werden, um die Orientierung der Werkstücke nochmals zu verändern und/oder um Arbeitsschritte an den Werkstücken durchzuführen. Bei der Endablage kann es sich dabei insbesondere um eine Transporteinrichtung handeln, welche die Werkstücke einer Verarbeitung und/oder Montage zuführt.

Bevorzugt wird die Positioniervorrichtung dazu eingesetzt, um die Werkstücke von der Zwischenstation aufzunehmen und wahlweise auf der zweiten Zwischenstation und der Endablage abzulegen.

Bevorzugt ist eine zweite Objekterkennungseinrichtung vorgesehen, welche die Orientierung des Werkstückes auf der Zwischenstation bestimmt. Bevorzugt entscheidet die Steuerung anhand der Daten der zweiten Objekterkennungseinrichtung, ob ein Werkstück unmittelbar zur Endablage oder zunächst zur zweiten Zwischenstation gelangt.

Weiterhin kann vorgesehen sein, dass es sich bei der zweiten Zwischenstation um einen Umgreifplatz handelt, welcher ein Greifen des Werkstücks mit geänderter Orientierung relativ zum Greifer erlaubt.

Befindet sich ein Werkstück bereits in einer Position auf der Zwischenstation, welche ein Greifen mit einer gewünschten Ausrichtung erlaubt, so kann es durch die Positioniervorrichtung unmittelbar auf der Endablage abgelegt werden. Wird dagegen erkannt, dass das Werkstück so auf der Zwischenstation liegt, dass es nicht wie gewünscht auf der Endablage abgelegt werden kann, so wird es zunächst auf die zweite Zwischenstation verbracht, wo es nochmals mit geänderter Orientierung relativ zum Greifer gegriffen wird, bevor es auf der Endablage abgelegt wird. Bevorzugt wird dieser Vorgang automatisch durch die Steuerung durchgeführt. Bevorzugt erfolgt dabei sowohl das Ablegen als auch das Aufnehmen von der zweiten Zwischenstation durch die Positioniervorrichtung.

Bei der ersten Objekterkennungseinrichtung handelt es sich bevorzugt um einen 3D-Sensor. Insbesondere kann die erste Objekterkennungseinrichtung einen Laserscanner umfassen. Da die Werkstücke im Behälter üblicherweise in mehreren Lagen und ungeordnet angeordnet sind, wird für ein erfolgreiches Greifen 3D-Information benötigt.

Bevorzugt umfasst die zweite Objekterkennungseinrichtung dagegen einen 2D-Sensor. Insbesondere kann bei der zweiten Objekterkennungseinrichtung auf einen 3D-Sensor verzichtet werden, da die Werkstücke bereits vereinzelt und in einer definierten Höhe angeordnet sind. Insbesondere eine Vorrichtung gemäß dem zweiten und dritten Aspekt vereinfacht die Erfassung zusätzlich, und ermöglicht daher auch mittels einer 2D-Erfassung eine sichere Arbeit der Positioniervorrichtung. Insbesondere kann es sich bei dem 2D-Sensor dabei um einen Kamerasensor handeln.

Die Positioniervorrichtung umfasst bevorzugt einen Greifer zum Abnehmen der Werkstücke von der Zwischenstation. In einer möglichen Ausgestaltung kann der erste Greifer auch als Positioniervorrichtung eingesetzt werden, d.h. sowohl das Ablagen auf der Zwischenstation als auch das Aufnehmen von der Zwischenstation erfolgt durch den ersten Greifer. Bevorzugt handelt es sich bei dem Greifer der Positioniervorrichtung jedoch um einen zweiten Greifer.

Bevorzugt wird der erste und/oder der zweite Greifer durch einen Greiferarm bewegt. Dabei kann es sich um einen Roboterarm eines 6-achsigen Roboters oder um einen an einem Flächen- oder Linearportal angeordneten Greiferarm handeln. Der erste und der zweite Greifer können dabei an dem gleichen Greiferarm angeordnet sein. Besonders bevorzugt sind der erste und der zweite Greifer jedoch jeweils separat an einen ersten bzw. einen zweiten Greiferarm angeordnet.

In einer möglichen Ausgestaltung der vorliegenden Erfindung sind im Arbeitsbereich des ersten Greifers mehrere Behälter mit Werkstücken anordenbar, aus welchen der erste Greifer Werkstücke greifen kann. Insbesondere kann eine Zuführanordnung mit mindestens zwei nebeneinander angeordneten Zuführbereichen für Behälter vorgesehen sein. Die Zuführanordnung erlaubt daher das Zuführen mehrerer Behälter in den Arbeitsbereich des ersten Greifers.

Bevorzugt erlaubt die Zuführanordnung das Auswechseln eines leeren ersten Behälters, während gleichzeitig ein zweiter Behälter durch den ersten Greifer entleert wird. Alternativ oder zusätzlich kann die Vorrichtung das wahlweise Entnehmen von Werkstücken aus zwei Behältern erlauben.

Bevorzugt ist die erste Objekterkennungseinrichtung mittels einer Verfahranordnung über jeden der Behälter und/oder Zuführbereiche fahrbar. Dies erlaubt es, mit nur einer ersten Objekterkennungseinrichtung Werkstücke in jedem der Behälter zu erfassen.

Weiterhin kann eine Trennvorrichtung vorgesehen sein, über welche die Zuführbereiche einzeln von dem Arbeitsbereich des ersten Greifers trennbar sind. Dies erlaubt es, einen Behälter zu wechseln, während die Vorrichtung Werkstücke aus einem anderen Behälter entnimmt. Insbesondere kann als Trennvorrichtung eine Haube vorgesehen sein, welche über einen der Behälter und/oder einen der Zuführbereiche gefahren werden kann.

Bevorzugt werden mindestens drei Zuführbereiche vorgesehen. Dies erlaubt es zum einen, parallel Werkstücke aus zwei Behältern zu entnehmen, wobei der dritte Zuführbereich dazu eingesetzt wird, um leere Behälter durch volle Behälter zu ersetzen.

In einer bevorzugten Ausgestaltung ist die Vorrichtung gemäß der vorliegenden Erfindung so ausgeführt, dass mehrere unterschiedliche Werkstücke nebeneinander gehandhabt werden können. Bevorzugt können Werkstücke aus mindestens zwei Behältern parallel entnommen werden. Weiterhin bevorzugt sind mindestens zwei unterschiedliche Endablagen und/oder zwei Transportstrecken zum Abtransport der unterschiedlichen Werkstücke vorgesehen.

Neben der erfindungsgemäßen Vorrichtung umfasst die vorliegende Erfindung weiterhin entsprechende Zwischenstationen, wie sie oben für die Vorrichtung gemäß dem ersten, dem zweiten und dem dritten Aspekt bereits beschrieben wurden.

Die vorliegende Erfindung wird nun anhand von Ausführungsbeispielen und Zeichnungen näher dargestellt.

Dabei zeigen:
- Fig. 1:: ein Ausführungsbeispiel einer erfindungsgemäßen Vorrichtung in einer Draufsicht,
- Fig. 2:: das Ausführungsbeispiel aus Fig. 1 in einer perspektivischen Ansicht von schräg oben,
- Fig. 3:: das Ausführungsbeispiel aus Fig. 1 in einer Seitenansicht, bei welcher die Schutzumfassung teilweise entfernt wurde,
- Fig. 4:: das bei dem Ausführungsbeispiel aus Fig. 1 eingesetzte Ausführungs-beispiel einer Zwischenstation,
- Fig. 5:: ein Ausführungsbeispiel einer kippbaren Ablagefläche, wie sie bei dem Ausführungsbeispiel einer Zwischenstation gemäß Fig. 4 zum Einsatz kommt,
- Fig. 6:: ein Ausführungsbeispiel eines Drehtisches, wie er bei dem in Fig. 4 ge-zeigten Ausführungsbeispiel einer Zwischenstation zum Einsatz kommt,
- Fig. 7:: ein Ausführungsbeispiel einer erfindungsgemäßen Ausschleusestation, wie sie bei dem in Fig. 4 gezeigten Ausführungsbeispiel einer Zwischen-station zum Einsatz kommt,
- Fig. 8a:: eine perspektivische Ansicht einer zweiten Zwischenstation und
- Fig. 8b:: eine Seitenansicht einer zweiten Zwischenstation.

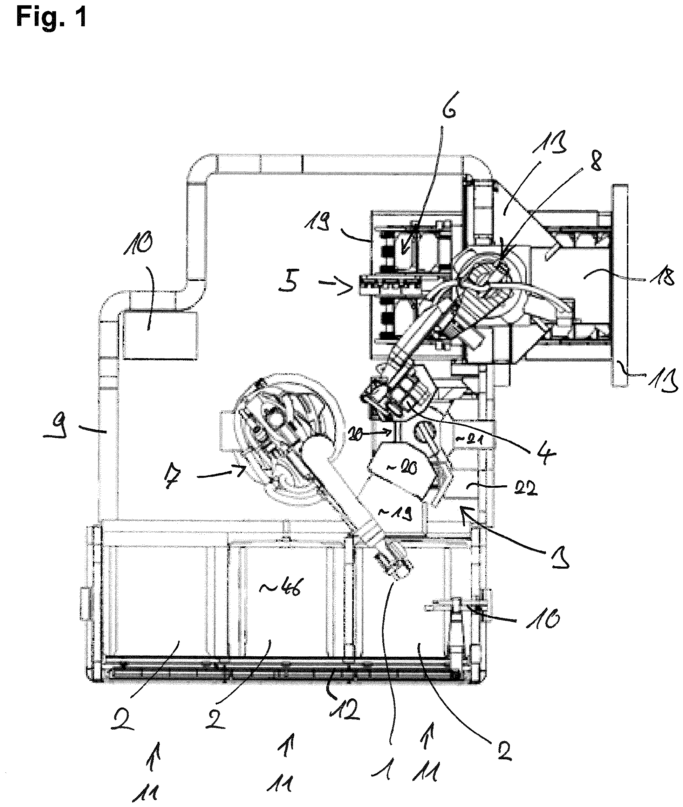

Fig. 1 bis 8 zeigen ein Ausführungsbeispiel einer erfindungsgemäßen Vorrichtung, bei welcher sämtliche Aspekte der vorliegenden Erfindung in Kombination verwirklicht sind. Die im Ausführungsbeispiel gezeigte Umsetzung der einzelnen Aspekte kann jedoch auch jeweils unabhängig von der gezeigten Kombination eingesetzt werden, und bildet daher auch jeweils für sich genommen einen selbstständigen Aspekt der vorliegenden Erfindung.

Das in Fig. 1 bis 3 gezeigte Ausführungsbeispiel der erfindungsgemäßen Vorrichtung weist einen ersten Greifer 1 auf, welcher zum Greifen von Werkstücken aus den Behältern 2 eingesetzt wird. In den Behältern 2 können Werkstücke geordnet oder ungeordnet zur Verfügung gestellt werden.

Weiterhin ist eine Objekterkennungseinrichtung 10 vorgesehen, welche die in den Behältern 2 vorhandenen Werkstücke erfasst. Die Vorrichtung weist eine Steuerung auf, welche die Daten der Objekterkennungseinrichtung 10 auswertet, eine Pfadplanung zur Ansteuerung des Greifers vornimmt, und den Greifer anhand dieser Pfadplanung ansteuert, um die Werkstücke aus dem Behälter 2 zu entnehmen. Die Steuerung ist im Ausführungsbeispiel in einem Schaltschrank 10 angeordnet.

Bei dem in Fig. 1 bis 3 gezeigten Ausführungsbeispiel ist der erste Greifer 1 an einem Roboterarm 7 angeordnet, und wird durch diesen bewegt. Bei dem Roboterarm kann es sich insbesondere um einen 6-Achs-lndustrieroboter handeln. Alternativ könnte der erste Greifer auch an einem Flächen- oder Linearportal angeordnet und über dieses bewegt werden. Bevorzugt ist der erste Greifer 1 über ein Greifarmelement an dem ersten Roboterarm 7 oder dem Flächen- oder Linearportal angeordnet, welches eine oder mehrere weitere Bewegungsachsen aufweist, um eine komplette Entleerung des Behälters sicher zu stellen. Insbesondere kann das Greifarmelement eine Schwenkachse und eine Drehachse aufweisen. Das Greifarmelement bzw. die Anordnung und Ausgestaltung des ersten Greifers 1 kann insbesondere so erfolgen, wie dies aus der DE102013013114 A1 bekannt ist. Bei dem ersten Greifer handelt es sich im Ausführungsbeispiel um einen mechanischen Greifer.

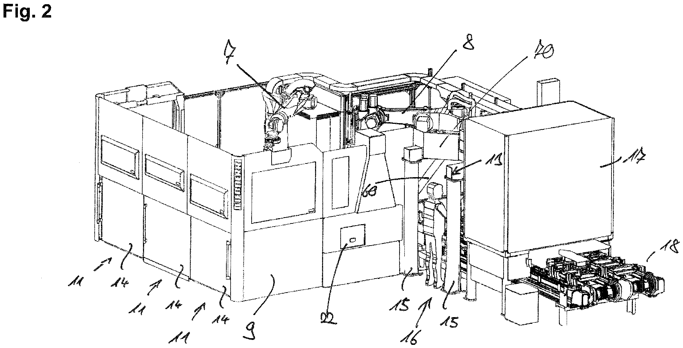

Bei dem in den Figuren dargestellten Ausführungsbeispielen können mehrere Behälter 2 im Arbeitsbereich des ersten Greifers 1 angeordnet werden. Hierfür ist eine Zuführanordnung mit drei Zuführbereichen 11 vorgesehen, in welche jeweils ein Behälter eingeführt werden kann. Wie in Fig. 2 erkennbar weist die Schutzumfassung 9 der Vorrichtung hierfür jeweils Türen 14 auf, über welche die Behälter in die Zuführbereiche eingeführt und aus diesen entnommen werden können. Weiterhin ist eine Trennanordnung in Form einer verschiebbaren Haube 46 vorgesehen, welche wahlweise über einem der drei Zuführbereiche angeordnet werden kann. Die Trennanordnung trennt den jeweiligen Zuführbereich vom Arbeitsbereich des Greifers 1, so dass ein im abgetrennten Zuführbereich angeordneter Behälter 2 ausgetauscht werden kann, ohne den Betrieb der Vorrichtung zu stoppen. Durch die Verwendung von drei Zuführbereichen sind jeweils zwei Zuführbereiche zum Arbeitsbereich des Greifers hin offen. Dies ermöglicht es, beispielsweise zwei Behälter mit unterschiedlichen Werkstücken parallel zu entleeren.

Die Objekterfassungseinheit 10 weist im Ausführungsbeispiel einen Sensor auf, welcher an einer Verfahranordnung 12 verfahrbar ist und hierdurch über jedem der Behälter bzw. Zuführbereiche angeordnet werden kann. Hierdurch ist nur eine erste Objekterkennungseinheit 10 notwendig, um Werkstücke in jedem der Behälter zu erfassen.

Bei den Behältern kann es sich beispielsweise um Metallboxen oder Gitterboxen handeln. Die im Ausführungsbeispiel gezeigte Vorrichtung kann mit drei Behältern eingesetzt werden, welche jeweils identische Werkstücke umfassen, oder mit zwei oder drei Behältern mit unterschiedlichen Werkstücken.

Die Objekterfassung der Werkstücke im Behälter durch die erste Objekterkennungseinrichtung 10, die Pfadplanung sowie des Ansteuerung des ersten Greifers sowie die Ausgestaltung der ersten Objekterkennungseinrichtung kann so erfolgen, wie dies aus der DE 102012012988 A1 bekannt ist. Die Ausgestaltung und der Betrieb der Zuführeinheit kann so erfolgen, wie dies aus der DE 102014008108 A1 bekannt ist.

Die Vorrichtung kann auch nur einen oder zwei Zuführbereiche aufweisen und/oder nur einen Behälter, welcher im Arbeitsbereich des ersten Greifers angeordnet ist.

Die in Fig. 1 bis 3 gezeigte Vorrichtung weist eine erste Zwischenstation 3 auf, auf welcher die durch den ersten Greifer 1 aus einem der Behälter 2 entnommenen Werkstücke abgelegt werden, um vereinzelt zu werden und/oder von dort aus mit höherer Präzision noch einmal gegriffen zu werden. Dabei ist eine Positioniervorrichtung in Form eines zweiten Greifers 4 vorgesehen, welcher die Werkstücke von der Zwischenstation aufnimmt. Der zweite Greifer 4 ist im Ausführungsbeispiel an einem zweiten Roboterarm 8 angeordnet. In alternativen Ausgestaltungen könnte der zweite Greifer 4 auch an einem Flächen- oder Linearportal angeordnet sein. Bei dem zweiten Greifer handelt es sich im Ausführungsbeispiel um einen mechanischen Greifer. Weiterhin alternativ könnte der gleiche Greifer sowohl zum Ablegen der Werkstücke auf der Zwischenstation, als auch zum Wiederaufnehmen der Werkstücke von der Zwischenstation eingesetzt werden.

Die Zwischenstation 3 weist im Ausführungsbeispiel einen Ablagebereich auf, in welchem die Werkstücke durch den ersten Greifer 1 abgelegt werden, sowie einen hiervon räumlich getrennten Entnahmebereich, in welchem die Werkstücke durch den zweiten Greifer 4 entnommen werden. Dabei ist eine Transporteinrichtung vorgesehen, welche die Werkstücke auf der Zwischenstation vom Ablagebereich zum Entnahmebereich transportiert. Weiterhin ist eine zweite Objekterkennungseinrichtung 21 vorgesehen, welche die Werkstücke auf der Transporteinrichtung erfasst. Im Ausführungsbeispiel weist die Zwischenstation hierfür einen räumlich vom Ablagebereich und vom Entnahmebereich getrennten Erfassungsbereich auf.

Das Wiederaufnehmen der Werkstücke von der Zwischenstation erfolgt durch einen zweiten Greifer 4, welcher an einen zweiten Roboterarm 8 angeordnet ist. Dieser wird dafür eingesetzt, um die Werkstücke auf einer Transporteinrichtung 6 abzulegen. Die Transporteinrichtung 6 umfasst im Ausführungsbeispiel ein Transportband, auf welchem als Endablagen für die Werkstücke Nester angeordnet sind, in welche die Werkstücke eingelegt werden. Hier wären jedoch auch beliebige andere Transporteinrichtungen denkbar.

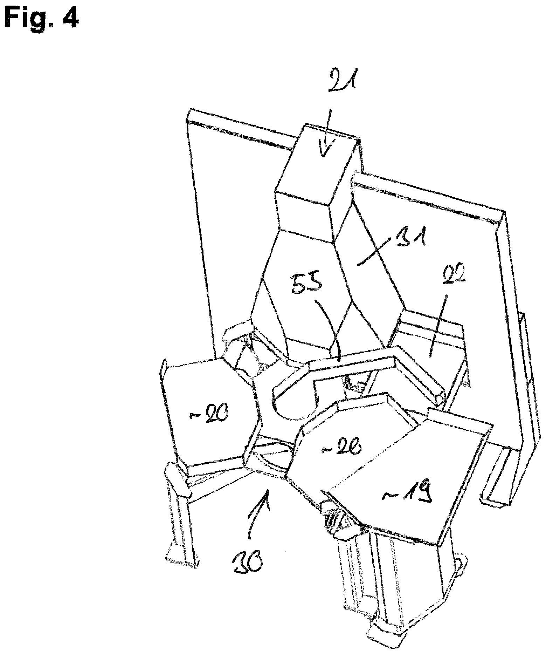

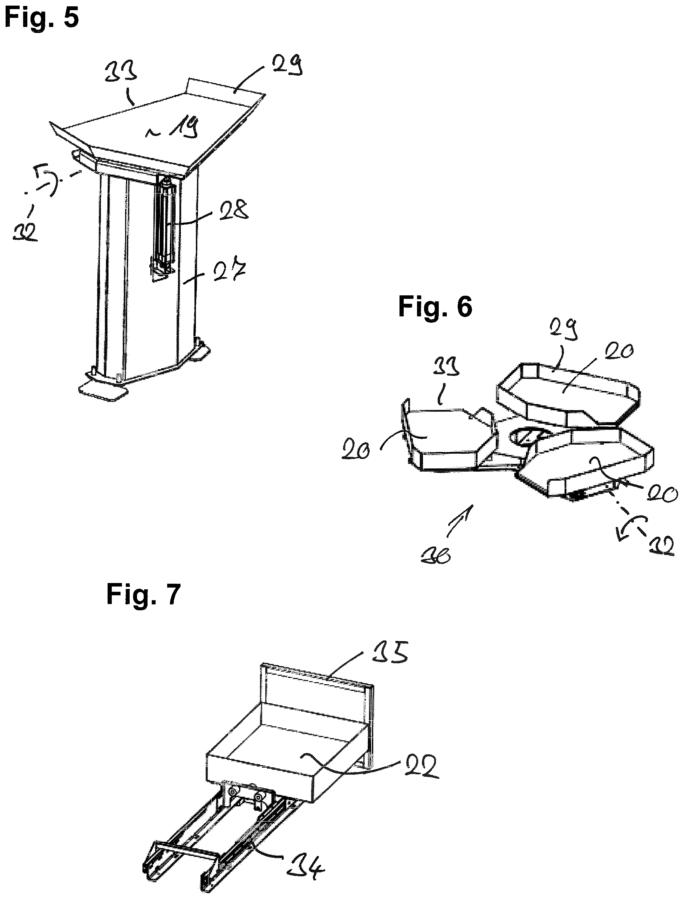

In Fig. 4 ist ein Ausführungsbeispiel der erfindungsgemäßen Zwischenstation dargestellt, in Fig. 5, 6 und 7 Komponenten dieser Zwischenstation. Die Zwischenstation verwirklicht dabei mehrere Aspekte der vorliegenden Erfindung in Kombination.

Gemäß einem Aspekt weist die Zwischenstation als Transporteinrichtung einen Drehtisch 30 mit mehreren Ablageflächen 20 auf. Durch Drehen des Drehtisches werden die Ablageflächen jeweils vom Ablagebereich über den Erfassungsbereich zum Entnahmebereich verfahren. Ein im Ablagebereich auf einer Ablagefläche abgelegtes Werkstück wird daher zunächst zur zweiten Objekterkennungseinrichtung 21 verfahren, dort erfasst, und nach einer weiteren Drehung des Drehtisches im Entnahmebereich von dem zweiten Greifer 4 entnommen.

Befindet sich eine erste Ablagefläche des Drehtisches im Ablagebereich, befindet sich gleichzeitig eine zweite Ablagefläche im Erfassungsbereich und eine dritte Ablagefläche im Entnahmebereich. Die Vorrichtung arbeitet dabei getaktet, so dass bei jeweils stehendem Drehtisch gleichzeitig ein erstes Werkstück im Ablagebereich abgelegt, ein zweites Werkstück im Erfassungsbereich erfasst und ein drittes Werkstück im Entnahmebereich entnommen wird. Sodann wird der Drehtisch gedreht, so dass die jeweiligen Werkstücke in den jeweils nächsten Bereich gelangen, woraufhin erneut entsprechende Arbeitsschritte in allen drei Bereich gleichzeitig vorgenommen werden.

Im Ausführungsbeispiel sind drei Ablageflächen 20 vorgesehen, welche mit einem Winkelabstand von 120 Grad am Drehtisch 30 angeordnet sind. Der Drehtisch wird nach jedem Arbeitstakt um 120 Grad gedreht.

In alternativen Ausgestaltungen der vorliegenden Erfindung könnte der Drehtisch auch eine größere Anzahl an Ablageflächen oder Drehpositionen aufweisen. Weiterhin alternativ müssen die Ablageflächen auch nicht physisch getrennt voneinander sein, sondern könnten beispielsweise als ringförmige Ablagefläche ausgestaltet sein.

Gemäß einem weiteren Aspekt der vorliegenden Erfindung weist die zweite Objekterkennungseinrichtung 21 eine Einhausung 31 auf, welche von einem im oberen Bereich der Einhausung angeordneten Sensor zur Transporteinrichtung hinunter reicht. Weiterhin weist die zweite Objekterkennungseinrichtung eine Lichtquelle zur Beleuchtung der Werkstücke auf. Durch die Einhausung 31 und die eigene Lichtquelle wird eine gleichbleibende, vom Umgebungslicht unabhängige Beleuchtung der Werkstücke im Erfassungsbereich möglich. Als Sensor wird dabei bevorzugt ein 2D-Sensor, beispielsweise ein Kamerasensor, eingesetzt.

Die Einhausung 31 ist im Ausführungsbeispiel als ein nur zur Transporteinrichtung hin offenes Gehäuse ausgeführt. Jede der Ablageflächen 20 kann durch Drehung des Drehtisches unter die Einhausung 31 gefahren werden. Bevorzugt befindet sich die gesamte Grundfläche einer Ablagefläche 20, wurde diese in den Erfassungsbereich gedreht, unterhalb der Einhausung 31.

Die Kanten der Einhausung 31 reichen zumindest in einem Zu- und einem Abfuhrbereich nicht komplett bis auf die Ebene der Ablageflächen 20, um das Zuführen von auf den Ablageflächen 20 angeordneten Werkstücken zu ermöglichen. Weisen die Ablageflächen 20, wie im Ausführungsbeispiel dargestellt, jedoch nach oben auskragende Randbereiche 29 auf, können diese im Wesentlichen bis zur Unterkante der Einhausung 31 reichen. Der Sensor ist innerhalb der Einhausung dagegen erheblich weiter von der Ablagefläche 20 entfernt als die Unterkanten der Einhausung. Insbesondere kann der Abstand zwischen dem Sensor und der Ablagefläche mindestens doppelt so groß und bevorzugt mindestens 5 mal so groß sein wie der Abstand zwischen der Unterkante der Einhausung im Bereich des Zu- und Abführbereiches und der Ablagefläche 20.

Gemäß einem weiteren Aspekt der vorliegenden Erfindung weist die Zwischenstation kippbare Ablageflächen auf.

Im Ausführungsbeispiel sind die Ablageflächen 20 des Drehtisches als kippbare Ablageflächen ausgestaltet. Ein Kippen der Ablageflächen 20 kann dazu eingesetzt werden, um Werkstücke auszuschleusen.

Das Ausschleusen kann dadurch erfolgen, dass eine sich im Erfassungsbereich befindliche Ablagefläche 20 des Drehtisches gekippt wird. Bevorzugt ist die Einhausung 31 dabei so ausgestaltet, dass sie ein Kippen der Ablagefläche 20 in ihrem Inneren erlaubt. Bevorzugt ist die Unterkante der Einhausung 31 hierfür außerhalb einer Grundfläche der im Erfassungsbereich befindlichen Ablagefläche 20 angeordnet, so dass diese in die Einhausung hinein kippen kann.

Ausgehend von der Ablagefläche 20 rutschen die Werkstücke in eine Ausschleuse-Vorrichtung 21, durch welche die Werkstücke manuell aus der Vorrichtung entnommen werden können.

Im Ausführungsbeispiel ist weiterhin ein Tisch 27 vorgesehen, welcher eine kippbare Ablagefläche 19 aufweist. Dieser ist neben der Transporteinrichtung angeordnet. Im Ausführungsbeispiel befindet er sich zwischen dem Behälter und dem Drehtisch.

Die Steuerung ist so ausgestaltet, dass der erste Greifer ein gegriffenes Werkstück nur dann auf die kippbare Ablagefläche 19 legt, wenn eine falsche Anzahl von Werkstücken gegriffen wurde, insbesondere wenn mehr als ein Werkstück gegriffen wurde. Dies kann insbesondere dann geschehen, wenn sich ein anderes Werkstück mit dem gegriffenen Werkstück so verhakt hat, dass es durch den ersten Greifer mit angehoben wird. Dies kann beispielsweise durch eine Lichtschranke erfasst werden, welche erfasst, mit welchem Abstand des ersten Greifers zur Lichtschranke ein Werkstück die Lichtschranke durchbricht. Entspricht dieser Abstand nicht dem Abstand, welcher beim Greifen nur eines Werkstückes zu erwarten wäre, geht die Steuerung vom Greifen mehrerer Werkstücke aus, und legt diese auf die Ablagefläche 19. Wird nur ein Werkstück gegriffen, so wird dieses unmittelbar auf eine Ablagefläche 20 der Transporteinrichtung gelegt.

Werden Werkstücke auf der Ablagefläche 19 angelegt, wird diese durch Kippen in eine schräge Position verbracht und bildet so eine Rutsche, von welcher die Werkstücke auf eine Ablagefläche der Transporteinrichtung der Zwischenstation rutschen, im Ausführungsbeispiel auf eine Ablagefläche 20 des Drehtisches, welche sich im Ablagebereich befindet.

Durch ein darauffolgendes Bewegen der Transporteinrichtung, im Ausführungsbeispiel durch Drehen des Drehtisches, werden die auf die Ablagefläche gerutschten Werkstücke in den Erfassungsbereich gebracht, wo mittels der zweiten Objekterkennungseinheit erfasst wird, ob tatsächlich zu viele Werkstücke auf der Ablagefläche 20 des Drehtisches liegen. Bestätigt die zweite Objekterkennungseinrichtung 21, dass zu viele Werkstücke auf der Ablagefläche 20 liegen, werden diese mittels eines Kippens der Ablagefläche 20 ausgeschleust.

Die mechanische Ausführung des Tisches 27 ist in Fig. 5 näher dargestellt. Dieser weist ein Podest auf, auf welchem die Ablagefläche 19 um eine horizontale Drehachse 32 kippbar angeordnet ist. Zum Kippen wird ein zwischen dem Podest und der Ablagefläche 19 angeordneter Pneumatikzylinder 28 eingesetzt.

Die nähere Ausgestaltung der am Drehtisch 30 angeordneten kippbaren Ablageflächen 20 ist in Fig. 6 näher dargestellt. Diese sind jeweils über eine horizontale Drehachse 32 am Drehtisch 30 angeordnet, wobei das Kippen über nicht erkennbare Pneumatikzylinder erfolgt.

Als Antrieb zum Kippen könnten selbstverständlich auch andere Antriebe eingesetzt werden, insbesondere andere Linearantriebe.

Die kippbaren Ablageflächen 19 und 20 weisen jeweils eine ebene Ablagefläche und eine offene Kante 33 auf, welche sich im gekippten Zustand unten befindet und über welche die Werkstücke von der Ablagefläche rutschen. In den übrigen Randbereichen weisen die Ablageflächen dagegen nach oben auskragende Ränder 29 auf, welche verhindern, dass Werkstücke in diesen Bereichen versehentlich von den Ablageflächen rutschen.

Die Ausgestaltung der Ausschleuse-Vorrichtung ist in Fig. 7 näher dargestellt. Hierbei handelt es sich im Ausführungsbeispiel um eine Schublade 22, welche so unterhalb des Drehtisches angeordnet ist, dass die Werkstücke, welche sich auf einer kippbaren Ablagefläche 20, welche sich im Erfassungsbereich befindet, befinden, durch Kippen dieser Ablagefläche in die Schublade 22 hinein rutschen. Die Schublade 22 kann über Schienen 34 bewegt werden, und ist von außerhalb der Schutzumfassung 8 der Vorrichtung zugänglich.

Die Front 35 der Schublade 22 bildet hierfür einen Teil der Schutzumfassung 8 der Vorrichtung. Wie in Fig. 2 erkennbar, kann die Schublade 22 hierdurch von außerhalb der Schutzumfassung der Vorrichtung bedient werden, um ausgeschleuste Werkstücke manuell zu entfernen.

Die Zwischenstation weist die in Fig. 4 dargestellte Schutzanordnung 55 auf, welche den Bereich der Schublade von den Arbeitsbereich des ersten Greifers trennt und daher einen Entnehmen der Werkstücke aus der Schublade ohne Unterbrechung der Arbeit der Vorrichtung ermöglicht.

Gemäß einem weiteren Aspekt der vorliegenden Erfindung, welcher aus Fig. 1 bis 3 ersichtlich ist, ist der zweite Roboterarm 8, welcher zum Ablegen der Werkstücke auf der Transporteinrichtung 6 eingesetzt wird, auf einem Podest 13 angeordnet, unter welchem sich die Transporteinrichtung 6 hindurch erstreckt.

Die Transporteinrichtung weist einen Ablagebereich 19 auf, welcher sich aus dem Bereich des Podestes heraus neben das Podest erstreckt. Der Ablagebereich 19 der Transporteinrichtung 6 ist daher für den zweiten Greifer 4 bzw. den zweiten Roboterarm 8 gut zugänglich.

Wie insbesondere aus Fig. 2 erkennbar, ist unterhalb des Podestes 13 eine Handhabungsstation 16 vorgesehen, welche zur manuellen Handhabung der Werkstücke auf der Transporteinrichtung eingesetzt werden kann. Durch die Anordnung des zweiten Roboterarms 8 auf dem Podest 13 ergibt sich zum einen eine äußerst platzsparende Konstruktion. Zum anderen ist die Station 16 durch das Podest 13 von dem Arbeitsbereich des Roboterarms 8 bzw. des zweiten Greifers weitgehend getrennt.

Das Podest 13 weist im Ausführungsbeispielen mehrere Stützen 15 auf, welche wiederrum eine Plattform tragen, auf welcher der zweite Roboterarm 8 angeordnet ist. Zwischen zwei Stützen 15 ist die Transportstrecke 16, welche unterhalb des Podestes zwischen den Stützen hindurch verläuft, von außen her zugänglich. Der Ablagebereich 19 und die Station 16 sind unterhalb der Ebene des Podestes zusätzlich über eine Strebe 60 des Podestes voneinander getrennt, unter welcher die Transporteinrichtung 6 hindurch fährt.

Oberhalb der Station 60 befindet sich eine Schutzwand 70, welche den Arbeitsbereich des zweiten Roboterarms von der Station trennt.

Der zweite Roboterarm 8 weist eine Basis 23 auf, welche auf dem Podest 13 angeordnet ist. Auf der Basis 23 ist ein erstes Element 24 des Roboterarms über eine vertikale Drehachse drehbar angeordnet. Das erste Element 24 weist eine horizontale Schwenkachse auf, über welche ein erstes Armsegment 25 am ersten Element angeordnet ist. Der Roboterarm 8 kann dabei beispielsweise als ein normaler 6-Achs-Industrieroboter ausgeführt sein.

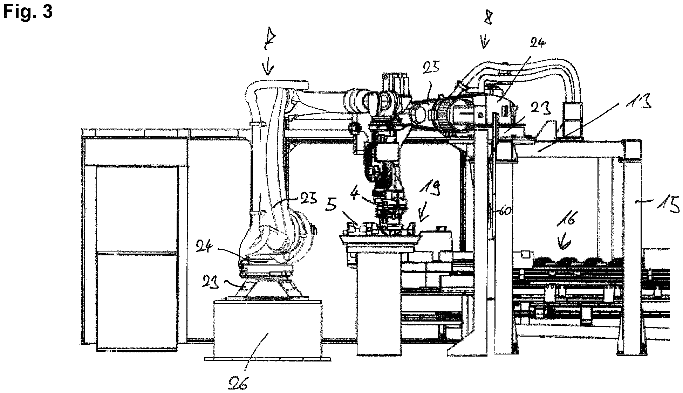

Wie in Fig. 3 erkennbar, kann auch der erste Roboterarm 7 einen Aufbau aufweisen, wie er soeben im Hinblick auf den zweiten Roboterarm beschrieben wurde. Im Ausführungsbeispiel steht die Basis 23 des ersten Roboterarms ebenfalls auf einen Podest 26, welches jedoch niedriger als das Podest 23 ist, auf welchem der zweite Roboterarm 8 angeordnet ist.

Im Ausführungsbeispiel ist die Basis 23 des zweiten Roboterarms 8 an dem dem Ablagebereich 19 zugewandten Ende des Podestes 13 angeordnet, und befindet sich daher oberhalb des Bereichs, welcher den Ablagebereich 19 von den Handhabungsbereich 16 der Station trennt.

Im Ablagebereich auf der Transporteinrichtung 6 abgelegte Werkstücke werden zunächst in den Handhabungsbereich bzw. im Bereich der Station 16 verfahren und von dort aus weiter in einen sich außerhalb der Vorrichtung befindlichen Bereich 18 der Transporteinrichtung.

Am Ausgang der Vorrichtung kann wie in Fig. 2 ersichtlich noch eine Bearbeitungsstation 17 angeordnet sein, welche beispielsweise zur Kennzeichnung der Werkstücke, beispielsweise über eine Lasermarkierung, eingesetzt werden kann.

Im Ausführungsbeispiel ist die Vorrichtung zum parallelen Handhaben von zwei unterschiedlichen Werkstücken ausgelegt. Hierfür weist die Transporteinrichtung 6 zwei separate, parallele Transportstrecken mit entsprechend unterschiedlichen Nestern auf.

Die Vorrichtung gemäß der vorliegenden Erfindung weist weiterhin eine zweite Zwischenstation 5 auf, welche als Umgreifstation ausgestaltet ist. Die Werkstücke müssen mit einer spezifischen Ausrichtung auf der Transporteinrichtung 6 abgelegt werden, was wiederrum eine spezifische Ausrichtung zwischen dem zweiten Greifer 4 und den Werkstücken erfordert. Eine solche Ausrichtung ist beim Aufnehmen der Werkstücke von der ersten Zwischenstation 3 nur dann möglich, wenn die Werkstücke bereits mit der richtigen Orientierung über eine Ablagefläche der ersten Zwischenstation angeordnet sind. Solche bereits richtig orientierten Werkstücke werden unmittelbar von der ersten Zwischenstation auf die Transporteinrichtung abgelegt.

Werkstücke, welche mit einer falschen Orientierung auf der ersten Zwischenstation angeordnet sind, werden dagegen zunächst durch den zweiten Greifer 4 auf der zweite Zwischenstation abgelegt, und dort noch einmal mit geänderter Orientierung zwischen Werkstück und Greifer gegriffen, um dann von der zweiten Zwischenstation auf der Transporteinrichtung 6 abgelegt zu werden.

Die Orientierung der Werkstücke auf der Zwischenstation wird über die zweite Objekterkennungseinrichtung 1 bestimmt, wobei die Steuerung den zweiten Greifer 4 auf Grundlage der Daten der zweiten Objekterkennungseinrichtung 21 entsprechend dem oben dargestellten Vorgehen ansteuert.

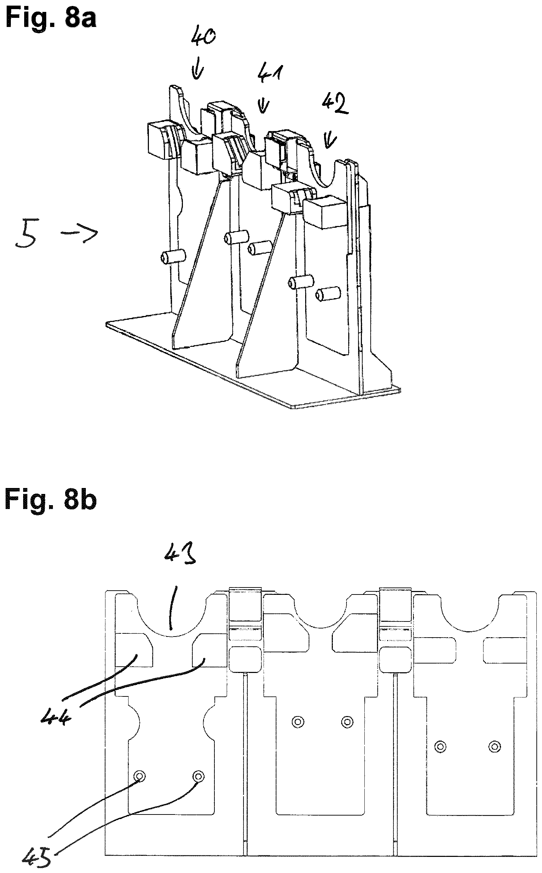

In Fig. 8a und 8b ist ein Ausführungsbeispiel für eine als zweite Zwischenstation einsetzbare Umgreifstation dargestellt, wobei hier drei separate Umgreifplätze 40, 41 und 42 für drei unterschiedliche Werkstücke vorhanden sind. Da es sich bei den hier zu handhabenden Werkstücken um Pleuel handelt, sind Blöcke 44 vorgesehen, auf welchen der Pleuelkopf zu liegen kommt, sowie Stifte 45, welche die Position der Pleuelstange begrenzen. Im oberen Bereich ist eine ringförmige Aussparung vorgesehen, so dass ein erneutes Greifen von der anderen Seite durch das Pleuelauge möglich ist. Bei anderen Ausgestaltungen des Werkstückes würden selbstverständlich anders ausgestaltet Umgreifplätze eingesetzt.

Im oben beschriebenen Ausführungsbeispiel wurde der zweite Greifer 4 bzw. der zweite Roboterarm 8 dazu eingesetzt, um Werkstücke von einer ersten Zwischenstation zu greifen. In alternativen Ausgestaltungen der vorliegenden Erfindung könnte der zweite Roboterarm 8 jedoch auch unmittelbar dazu eingesetzt werden, um Werkstücke aus einem Behälter zu greifen und auf der Transporteinrichtung 6 und/oder der zweiten Zwischenstation abzulegen. In diesem Fall könnte auf die erste Zwischenstation und/oder den ersten Greifer verzichtet werden. Bevorzugt ist der zweite Greifer dann über ein Greifarmelement mit einer oder mehreren zusätzlichen Bewegungsachsen an dem zweiten Greifarm 8 angeordnet, insbesondere über ein Greifarmelement, wie es oben im Hinblick auf den ersten Greifer beschrieben wurde.

Auch im Übrigen können die einzelnen Aspekte der vorliegenden Erfindung, welche anhand des Ausführungsbeispiels näher dargestellt wurden, jeweils auch für sich genommen und ohne die übrigen Aspekte erfindungsgemäß eingesetzt werden.

Insbesondere können dabei auch die spezifischen Ausgestaltungen, welche anhand des Ausführungsbeispiels für die einzelnen Aspekte beschrieben wurden, jeweils unabhängig von den übrigen Aspekten und deren Ausgestaltung eingesetzt werden.

## Patentansprüche

1. Vorrichtung zum automatisierten Entnehmen von in einem Behälter angeordneten Werkstücken,
mit einer ersten Objekterkennungseinrichtung zum Erfassen der Werkstücke im Behälter;
einem ersten Greifer zum Greifen und Entnehmen der Werkstücke aus dem Behälter;
einer Steuerung zur Auswertung der Daten der ersten Objekterkennungseinrichtung, zur Pfadplanung und zur Ansteuerung des ersten Greifers;
einer Zwischenstation, auf welcher der erste Greifer die Werkstücke nach dem Entnehmen aus dem Behälter ablegt, und
einer Positioniervorrichtung, welche die Werkstücke ausgehend von der Zwischenstation genauer positioniert und/oder vereinzelt,
**dadurch gekennzeichnet,**
**dass** die Zwischenstation mindestens eine kippbare Ablagefläche aufweist, welche über einen Kippmechanismus in eine schräge Position kippbar ist.

2. Vorrichtung nach Anspruch 1, wobei die kippbare Ablagefläche so ausgestaltet ist, dass ein auf der kippbaren Ablagefläche abgelegtes Werkstück durch das Kippen von der kippbaren Ablagefläche rutscht.

3. Vorrichtung nach Anspruch 1 oder 2, wobei die Zwischenstation eine Transporteinrichtung umfasst, welche die Werkstücke von einem Ablagebereich in einen Entnahmebereich transportiert, wobei es sich bevorzugt um einen Drehtisch handelt.

4. Vorrichtung nach Anspruch 3, wobei die kippbare Ablagefläche so angeordnet ist, dass ein auf der kippbaren Ablagefläche abgelegtes Werkstück durch Kippen der kippbaren Ablagefläche auf die Transporteinrichtung rutscht, wobei die Vorrichtung bevorzugt einen Sensor aufweist, welcher erkennt, ob mehr als ein Werkstück gegriffen wurde, wobei die Steuerung den Greifer dann, wenn mehr als ein gegriffenes Werkstück erfasst wurden, so ansteuert, dass die Werkstücke auf der kippbaren Ablagefläche abgelegt werden und durch Kippen der Ablagefläche auf die Transporteinrichtung rutschen.

5. Vorrichtung nach Anspruch 3, wobei die kippbare Ablagefläche an der Transporteinrichtung angeordnet ist, wobei die Transporteinrichtung bevorzugt mehrere separat kippbare Ablageflächen aufweist, wobei die kippbare Ablagefläche bevorzugt an einem Drehtisch angeordnet ist, wobei der Drehtisch bevorzugt mehrere separat kippbare Ablageflächen aufweist.

6. Vorrichtung nach einem der vorangegangenen Ansprüche, mit einer Ausschleuse-Vorrichtung, welche so angeordnet ist, dass ein auf der kippbaren Ablagefläche abgelegtes Werkstück durch Kippen der Ablagefläche zur Ausschleuse-Vorrichtung rutscht, wobei es sich bei der Ausschleuse-Vorrichtung bevorzugt um eine Schublade handelt, wobei die Schublade bevorzugt von außerhalb einer Schutzumfassung der Vorrichtung aus bedient werden kann.

7. Vorrichtung zum automatisierten Entnehmen von in einem Behälter angeordneten Werkstücken, insbesondere nach einem der vorangegangenen Ansprüche,
mit einer ersten Objekterkennungseinrichtung zum Erfassen der Werkstücke im Behälter;
einem ersten Greifer zum Greifen und Entnehmen der Werkstücke aus dem Behälter;
einer Steuerung zur Auswertung der Daten der ersten Objekterkennungseinrichtung, zur Pfadplanung und zur Ansteuerung des ersten Greifers;
einer Zwischenstation, auf welcher der erste Greifer die Werkstücke nach dem Entnehmen aus dem Behälter ablegt, wobei die Zwischenstation eine Transporteinrichtung umfasst, welche die Werkstücke von einem Ablagebereich in einen Entnahmebereich transportiert,
eine Positioniervorrichtung, welche die Werkstücke ausgehend von der Zwischenstation genauer positioniert und/oder vereinzelt, und
eine zweite Objekterkennungseinrichtung zum Erfassen der Werkstücke auf der Transporteinrichtung,
**dadurch gekennzeichnet,**
**dass** die zweite Objekterkennungseinrichtung eine Lichtquelle zur Beleuchtung des Werkstücks aufweist, wobei die zweite Objekterkennungseinrichtung bevorzugt eine Einhausung aufweist, welche das Einfallen von Streulicht von außen auf das Werkstück verringert.

8. Vorrichtung nach Anspruch 7, wobei sich die Einhausung von einem Sensor, welcher in einem ersten Abstand zu einer Ablagefläche der Transporteinrichtung angeordnet ist, zur Transporteinrichtung hin erstreckt, wobei zwischen der Einhausung und der Ablagefläche der Transporteinrichtung ein Zu- und ein Abfuhrbereich offen bleibt, welcher das Zu- und Abführen der Werkstücke auf der Transporteinrichtung in den Bereich der Einhausung erlaubt, wobei die Einhausung im Zu- und ein Abfuhrbereich in einem zweiten Abstand zur Ablagefläche der Transporteinrichtung endet, wobei der zweite Abstand weniger als 50% des ersten Abstands beträgt, bevorzugt weniger als 20%.

9. Vorrichtung zum automatisierten Entnehmen von in einem Behälter angeordneten Werkstücken, insbesondere nach einem der vorangegangenen Ansprüche,
mit einer ersten Objekterkennungseinrichtung zum Erfassen der Werkstücke im Behälter;
einem ersten Greifer zum Greifen und Entnehmen der Werkstücke aus dem Behälter;
einer Steuerung zur Auswertung der Daten der ersten Objekterkennungseinrichtung, zur Pfadplanung und zur Ansteuerung des ersten Greifers;
einer Zwischenstation, auf welcher der erste Greifer die Werkstücke nach dem Entnehmen aus dem Behälter ablegt, wobei die Zwischenstation einen Drehtisch umfasst, welcher die Werkstücke von einem Ablagebereich in einen Entnahmebereich transportiert,
eine Positioniervorrichtung, welche die Werkstücke ausgehend von der Zwischenstation genauer positioniert und/oder vereinzelt, und
eine zweite Objekterkennungseinrichtung zum Erfassen der Werkstücke auf dem Drehtisch,
**dadurch gekennzeichnet,**
**dass** die zweite Objekterkennungseinrichtung so über dem Drehtisch angeordnet ist, dass ein Werkstück auf dem Weg von dem Ablagebereich in den Entnahmebereich in einen Erfassungsbereich gelangt, wo es durch die zweite Objekterkennungseinrichtung erfasst wird, bevor es durch Drehung des Drehtisches weiter zum Entnahmebereich bewegt wird.

10. Vorrichtung nach Anspruch 9, wobei der Drehtisch getaktet arbeitet und mindestens drei Drehpositionen aufweist, wobei eine Ablagefläche des Drehtisches in der ersten Drehposition des Drehtisches im Ablagebereich, in der zweiten Drehposition im Erfassungsbereich und in der dritten Drehposition im Entnahmebereich angeordnet ist, wobei das Ablegen eines Werkstückes auf den Drehtisch durch den Greifer, das Erfassen eines Werkstückes auf dem Drehtisch durch die zweite Objekterkennungseinrichtung und das Wiederaufnehmen eines Werkstückes von dem Drehtisch durch die Positioniervorrichtung jeweils bei stehendem Drehtisch erfolgen.

11. Vorrichtung nach Anspruch 9 oder 10, wobei der Drehtisch mindestens drei Ablageflächen aufweist, wobei sich immer dann, wenn eine erste Ablagefläche im Ablagebereich angeordnet ist, eine zweite Ablagefläche im Erfassungsbereich und eine dritte Ablagefläche im Entnahmebereich befindet, wobei bevorzugt jeweils gleichzeitig ein Ablegen eines ersten Werkstückes auf den Drehtisch durch den Greifer, ein Erfassen eines zweiten Werkstückes auf dem Drehtisch durch die zweite Objekterkennungseinrichtung und ein Wiederaufnehmen eines dritten Werkstückes von dem Drehtisch durch die Positioniervorrichtung erfolgen.

12. Vorrichtung nach einem der vorangegangenen Ansprüche, wobei die Positioniervorrichtung die Werkstücke von der Zwischenstation aufnimmt und auf eine zweite Zwischenstation und/oder eine Endablage legt, wobei die Positioniervorrichtung bevorzugt dazu eingesetzt wird, um die Werkstücke von der Zwischenstation aufzunehmen und wahlweise auf der zweiten Zwischenstation und der Endablage abzulegen, wobei bevorzugt eine zweite Objekterkennungseinrichtung vorgesehen ist, welche die Orientierung des Werkstückes auf der Zwischenstation bestimmt und wobei die Steuerung anhand der Daten der zweiten Objekterkennungseinrichtung entscheidet, ob ein Werkstück unmittelbar zur Endablage oder zunächst zur zweiten Zwischenstation gelangt, und/oder wobei es sich bei der zweiten Zwischenstation bevorzugt um einen Umgreifplatz handelt, welcher ein Greifen des Werkstücks mit geänderter Orientierung relativ zum Greifer erlaubt.

13. Vorrichtung nach einem der vorangegangenen Ansprüche, wobei die erste Objekterkennungseinrichtung einen 3D-Sensor und die zweite Objekterkennungseinrichtung einen 2D-Sensor umfasst.

14. Vorrichtung nach einem der vorangegangenen Ansprüche, wobei
die Positioniervorrichtung einen Greifer zum Abnehmen der Werkstücke von der Zwischenstation umfasst, wobei es sich vorteilhafterweise um einen zweiten Greifer handelt, und/oder
wobei der erste und/oder der zweite Greifer durch einen Greiferarm bewegt werden, wobei es sich vorteilhafterweise um einen Roboterarm eines 6-achsigen Roboters oder um einen an einem Flächen- oder Linearportal angeordneten Greiferarm handelt, und/oder
wobei im Arbeitsbereich des ersten Greifers mehrere Behälter mit Werkstücken anordenbar sind, aus welchen der erste Greifer Werkstücke greifen kann, wobei bevorzugt eine Zuführanordnung mit mindestens zwei nebeneinander angeordneten Zuführbereichen für Behälter vorgesehen ist, wobei die erste Objekterkennungseinrichtung bevorzugt mittels einer Verfahranordnung über jeden der Behälter und/oder Zuführbereiche fahrbar ist und/oder wobei bevorzugt eine Trennvorrichtung vorgesehen ist, über welche die Zuführbereiche einzeln von dem Arbeitsbereich des Greifers trennbar sind, wobei insbesondere eine Haube vorgesehen ist, welche über einen der Behälter und/oder einen der Zuführbereiche gefahren werden kann, und/oder
wobei mehrere unterschiedliche Werkstücke nebeneinander gehandhabt werden können.

15. Zwischenstation für eine Vorrichtung nach einem der vorangegangenen Ansprüche.
